# EUROPEAN PATENT APPLICATION

(11) **EP 0 987 731 A1**
(43) Date of publication of application: **22.03.2000**
(21) Application number: 98953049.8
(22) Date of filing: 13.11.1998
(51) Int. Cl.: H01J 17/16, H01J 11/02, C03C 4/08

(54) **PLASMA DISPLAY SUBSTRATE GLASS**

(30) Priority: 17.11.1997 JP 33358697
(71) Applicant: NIPPON ELECTRIC GLASS COMPANY, Limited, Otsu-shi Siga 520-8639 (JP)
(72) Inventor: YAMAOKA, Hideki Nippon Electric Glass Co., Ltd., Otsu-shi Shiga 520-8639 (JP); NAGAKANE, Tomohiro Nippon Electric Glass Co., Ltd., Shiga 520-8639 (JP)
(74) Representative: Tetzner, Michael, Dipl.-Ing.
(86) International application number: JP9805132
(87) International publication number: WO9926269

(57) **Abstract**

A substrate glass used for a front glass substrate of a color plasma display. When the thickness of the substrate glass for a plasma display is equal to 2.8 mm, light transmittances for the wavelengths of 530 nm and 586 nm are at least 3 % lower than each of light transmittances for the wavelengths of 460 nm, 550 nm and 620 nm. Preferably, Nd₂O₃ is contained in a glass composition.

## Description

### Technical Field

The present invention relates to a substrate glass for a front glass substrate of a color plasma display.

### Background Art

In a color plasma display, red, green and blue phosphors are excited by ultraviolet rays generated during discharge to emit visible light. An image produced by the above-mentioned emission is projected through a front glass substrate. The wavelength of emission of each phosphor is 620 nm for red, 550 nm for green, and 460 nm for blue.

The above-mentioned color plasma display can be thinned and large-sized and is therefore expected for a large-sized television in place of a CRT. However, in the present status, it has low levels both in contrast and in luminance in comparison with the CRT. Moreover, there is a problem that the contrast of the image is remarkably decreased by external light such as the sunlight and fluorescent light.

In order to improve the contrast of the image by absorbing the external light, consideration is made about the use of a front glass substrate which is colored by adding a very small amount of NiO or CoO to decrease a transmittance.

However, such coloring with NiO or CoO substantially uniformly decreases the transmittance over an entire region of a visible wavelength band. This unfavorably results in a decrease in luminance of the image because the light emitted from each of the red, the green, and the blue phosphors is absorbed also.

Therefore, it is an object of the present invention to provide a substrate glass for a plasma display, which is capable of obtaining a color image having a high luminance and a high contrast.

### Disclosure of the Invention

As a result of various studies, the present inventors have found out that a luminance can be increased by decreasing a transmittance for light having a wavelength other than those of emission colors of red, green, and blue phosphors. i.e., a transmittance for light around 530 nm (blue-green) between blue and green and a transmittance for light around 586 nm (yellow) between red and green. Thus, the present invention is proposed.

Specifically, a substrate glass for a plasma display according to the present invention is characterized in that, at a thickness of 2.8 mm, a light transmittance for each of wavelengths of 530 nm and 586 nm is at least 3 % lower than a light transmittance for each of wavelengths of 460 nm, 550 nm, and 620 nm.

### Brief Description of the Drawing

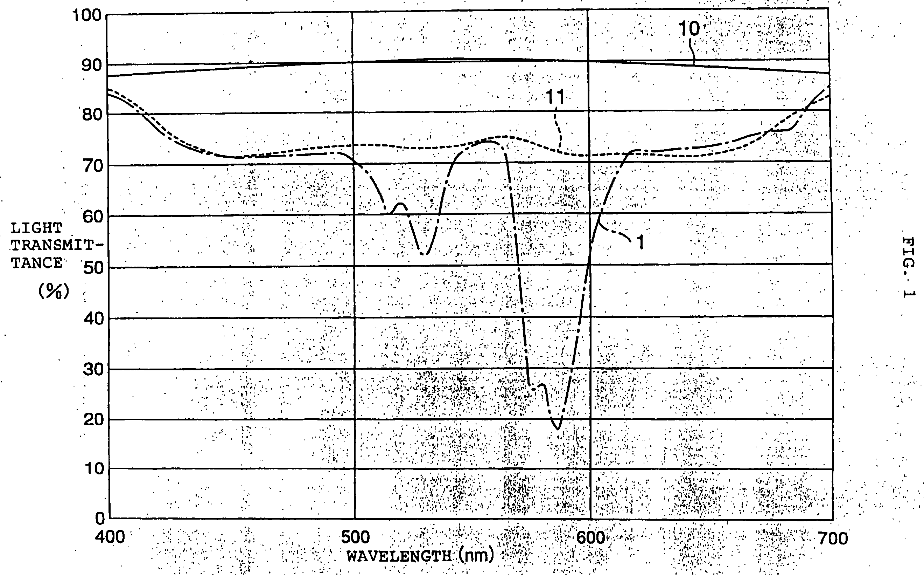

Fig. 1 is a graph showing light transmittance curves of a substrate glass at a thickness of 2.8 mm.

### Best Mode for Embodying the Invention

At first, description will be made in detail about a substrate glass for a plasma display according to the present invention.

The substrate glass for a plasma display according to the present invention is characterized in that, at a thickness of 2.8 mm, a difference in transmittance between the lowest one (the lowest transmittance for phosphor wavelengths) among light transmittances for wavelengths (phosphor wavelengths) corresponding to emission colors of phosphors and the highest one (the highest transmittance for intermediate wavelengths) among light transmittances for wavelengths (intermediate wavelengths) of 530 nm and 586 nm is not smaller than 3 %, preferably, not smaller than 5 %, more preferably, not smaller than 10 %. If the above-mentioned difference in transmittance is smaller than 3 %, a plasma display having a high luminance cannot be manufactured.

In the present invention, a glass composition preferably contains Nd₂O₃ in order to give the above-mentioned characteristic to the substrate glass. The glass containing Nd₂O₃ exhibits a high transmittability for light having wavelengths of 460 nm, 550 nm, and 620 nm and a sharp absorbability for light having the wavelengths of 530 nm and 586 nm. Therefore, by inclusion of Nd₂O₃, the substrate glass for a color plasma display is given a selective transmitting/absorbing ability of having a high transmittability for light corresponding to each of red, green, and blue phosphors and a high absorbability for yellow light and blue-green light.

If Nd₂O₃ is used for the above-mentioned purpose, the content of 0.1 % or more, especially 0.6 % or more is preferred in order to accomplish a sufficient effect. However, the content of 6 % or more, especially in excess of 10 % is unfavorable because devitrification tends to occur and material cost is increased.

In the present invention, for a base glass to which Nd₂O₃, or the like is added, it is possible to use a soda lime glass which is used as a building window glass. However, it is desirable to use a high strain point glass consisting essentially of, by weight percent, SiO₂ 50-65 % (preferably 52-62 %), Al₂O₃ 0.5-15 % (preferably 3-13 %), HgO+CaO+SrO+BaO 10-27 % (preferably 12-25 %), Li₂O+Na₂O+K₂O 7-15 % (preferably 8-14 %), ZrO₂ 0-9 % (preferably 1-8 %), TiO₂ 0-5 % (preferably 0-3 %), Cl 0-1 % (preferably 0-0.5 %), and SO₃ 0-1 % (preferably 0-0.5 %). Specifically, the soda lime glass has drawbacks that thermal contraction tends to occur during high-temperature treatment upon printing an electrode or an insulating paste because a strain point is low and that an electric resistance value of an electrode material is liable to change because a volume resistivity is low. On the contrary, the high strain point glass of the above-mentioned composition has a coefficient of thermal expansion of 75-95 × 10⁻⁷/°C and a high strain point so that thermal contraction hardly occurs during heat treatment. In addition, this glass has a characteristic that a volume resistivity is high in comparison with the soda lime glass.

Next, description will be made about the reason why the composition of the high strain point glass is limited as mentioned above.

SiO₂ is a network former of the glass. When the content of SiO₂ is less than 50 %, the glass has a low strain point so that thermal contraction readily occurs. On the other hand, the content of more than 65 % is unfavorable because the coefficient of thermal expansion becomes excessively small.

Al₂O₃ is a component to raise the strain point of the glass. When the content of Al₂O₃ is less, than 0.5 %, no effect can be obtained. When the content is more than 15 %, a coefficient of thermal expansion becomes excessively small.

Each of MgO, CaO, SrO and BaO is a component for enhancing meltability of the glass as well as for controlling the coefficient of thermal expansion. When the total amount of these components is less than 10 %, the coefficient of thermal expansion tends to become small. On the other hand, when the total amount is more than 27 %, the glass is readily devitrified and is difficult to shape. It is noted that preferable ranges of MgO, CaO, SrO and BaO are 0-5 %, 0-8 %, 0-10 % and 0-10 %, respectively.

Each of Li₂O, Na₂O and K₂O is a component for controlling the coefficient of thermal expansion. When the total amount of these components is less than 7 %, the coefficient of thermal expansion tends to become small. On the other hand, when the total amount is more than 15 %, the strain point becomes low. It is noted that preferable ranges of Li₂O, Na₂O and K₂O are 0-0.5 %, 2-8 %, and 2-10 %, respectively.

ZrO₂ has an effect of improving chemical durability. However, when the content is more than 9 %, the coefficient of thermal expansion becomes excessively small and devitrified substances are readily produced during a melting process of the glass, resulting in difficulty in shaping.

TiO₂ is a component for preventing the glass from being colored by ultraviolet rays. However, when the content is more than 5 %, the glass is readily devitrified and is difficult to shape.

Each of Cl and SO₃ can be added as a fining agent. However, the content of each component being more than 1 % will result in production of bubbles and is therefore unfavorable.

If the light transmittance of the glass having the above-mentioned composition for each wavelength (at the thickness of 2.8 mm) is 83 % or more (preferably 85 % or more) as the lowest transmittance for the phosphor wavelengths, 80 % or less (preferably 78 % or less) as the light transmittance for the wavelength of 530 nm, and 60 % or less (preferably 50 % or less) as the light transmittance for the wavelength of 586 nm, it is possible to manufacture a plasma display having sufficiently high luminance and contrast.

Further, the above-mentioned composition can additionally contain at least one of NiO and CoO for fine adjustment of chromaticity and adjustment of light transmittance. In case where these components are added, it is preferred that their contents fall within a range of 10-2000 ppm for NiO and 10-500 ppm for CoO.

When at least one of NiO or CoO is added, the glass has an external appearance which is gray but transparent. It is also preferable for the glass to have the light transmittance for each wavelength (at the thickness of 2.8 mm) which is 68 % or more (preferably 70 % or more) as the lowest transmittance for the phosphor wavelengths, 67 % or less (preferably 65 % or less) as the light transmittance for the wavelength of 530 nm, and 52 % or less (preferably 40 % or less) as the light transmittance for the wavelength of 586 nm.

Furthermore, in the glass of the present invention, Er₂O₃, Cr₂O₃, and/or Pr₆O₁₁ may preferably be added up to 6 % in total since the absorptivity of Nd₂O₃ is slightly weak for the wavelength around 530 nm as compared with that for the wavelength around 586 nm. Further, it is preferable that the content of Fe₂O₃ falls within a range of 0.03-1 %.

Now, the substrate glass for a plasma display according to the present invention will be described in conjunction with specific examples.

Tables 1 and 2 show examples of the present invention (samples Nos. 1-9) and conventional examples (samples Nos. 10-12).

**Table 1**

| Sample No. | | Examples | | | | | |
|---|---|---|---|---|---|---|---|
| | | 1 | 2 | 3 | 4 | 5 | 6 |
| Glass Composition weight% | SiO₂ | 59.7 | 56.0 | 57.2 | 60.7 | 56.0 | 59.7 |
| | Al₂O₃ | 7.0 | 4.0 | 2.5 | 4.5 | 4.0 | 7.0 |
| | MgO | 2.0 | 3.0 | 1.5 | 3.5 | 3.0 | 2.0 |
| | CaO | 2.0 | 6.0 | 6.5 | 1.0 | 6.0 | 2.0 |
| | SrO | 8.0 | 4.0 | 4.5 | 9.0 | 4.0 | 8.0 |
| | BaO | 0.5 | 7.0 | 7.0 | 1.0 | 8.0 | 0.5 |
| | Li₂O | - | - | - | 0.1 | - | - |
| | Na₂O | 5.5 | 5.0 | 4.5 | 4.0 | 5.0 | 5.5 |
| | K₂O | 8.0 | 7.0 | 7.0 | 9.2 | 7.0 | 8.0 |
| | ZrO₂ | 4.5 | 5.0 | 5.5 | 6.0 | 5.0 | 4.5 |
| | TiO₂ | 0.5 | 0.7 | 0.5 | 0.2 | 0.7 | 0.5 |
| | SO₃ | 0.2 | 0.2 | 0.2 | 0.2 | 0.2 | 0.2 |
| | Nd₂O₃ | 2.0 | 1.0 | 3.0 | 0.5 | 1.0 | 2.0 |
| | NiO | 210ppm | 210ppm | 210ppm | 210ppm | 100ppm | 45ppm |
| | CoO | 45ppm | 45ppm | 45ppm | 45ppm | 50ppm | 210ppm |
| | Fe₂O₃ | 0.07 | 0.07 | 0.07 | 0.07 | 0.07 | 0.07 |

| Light Transmittance (%) | | | | | | | |
|---|---|---|---|---|---|---|---|
| 460nm | | 72 | 71 | 69 | 71 | 78 | 72 |
| 530nm | | 53 | 63 | 46 | 67 | 65 | 53 |
| 550nm | | 74 | 75 | 75 | 74 | 77 | 74 |
| 586nm | | 19 | 37 | 10 | 51 | 38 | 19 |
| 620nm | | 72 | 73 | 73 | 72 | 74 | 72 |
| Lowest Transmittance for Phosphor Wavelengths - Highest Transmittance for Intermediate Wavelengths (%) | | 19 | 8 | 23 | 4 | 9 | 19 |
| Contrast | | ⓞ | ⓞ | ⓞ | ○ | ⓞ | ⓞ |

**Table 2**

| Sample No. | | Examples | | | Comparative Examples | | |
|---|---|---|---|---|---|---|---|
| | | 7 | 8 | 9 | 10 | 11 | 12 |
| Glass Composition weight% | SiO₂ | 56.4 | 56.5 | 57.2 | 59.7 | 59.7 | 59.7 |
| | Al₂O₃ | 8.0 | 11.0 | 2.5 | 7.0 | 7.0 | 7.0 |
| | MgO | 2.0 | 1.0 | 1.5 | 2.0 | 2.0 | 2.0 |
| | CaO | 2.0 | 2.0 | 6.5 | 2.0 | 2.0 | 2.0 |
| | SrO | 6.5 | 4.0 | 4.5 | 8.0 | 8.0 | 8.0 |
| | BaO | 8.0 | 8.0 | 7.0 | 2.5 | 2.5 | 2.5 |
| | Li₂O | - | 0.2 | - | - | - | - |
| | Na₂O | 4.3 | 7.0 | 4.5 | 5.5 | 5.5 | 5.5 |
| | K₂O | 6.8 | 4.0 | 7.0 | 8.0 | 8.0 | 8.0 |
| | ZrO₂ | 4.2 | 2.0 | 5.5 | 4.5 | 4.5 | 4.5 |
| | TiO₂ | 0.5 | 2.0 | 0.5 | 0.5 | 0.5 | 0.5 |
| | SO₃ | 0.2 | 0.2 | 0.2 | 0.2 | 0.2 | 0.2 |
| | Nd₂O₃ | 1.0 | 2.0 | 3.0 | - | - | - |
| | NiO | - | - | - | - | 210ppm | 45ppm |
| | CoO | - | - | - | - | 45ppm | 210ppm |
| | Fe₂O₃ | 0.07 | 0.07 | 0.07 | 0.07 | 0.07 | 0.07 |

| Light Transmittance (%) | | | | | | | |
|---|---|---|---|---|---|---|---|
| 460nm | | 87 | 86 | 85 | 89 | 72 | 72 |
| 530nm | | 77 | 64 | 54 | 90 | 73 | 73 |
| 550nm | | 90 | 89 | 89 | 90 | 74 | 74 |
| 586nm | | 45 | 23 | 12 | 90 | 73 | 73 |
| 620nm | | 89 | 89 | 89 | 89 | 72 | 72 |
| Lowest Transmittance for Phosphor Wavelengths - Highest Transmittance for Intermediate Wavelengths (%) | | 10 | 22 | 31 | -1 | -1 | -1 |
| Contrast | | ⓞ | ⓞ | ⓞ | X | - | - |

Each sample was prepared in the following manner.

At first, a batch was prepared to have each of glass compositions specified in the Tables. The batch was put in a platinum crucible and was then melted in an electric furnace at a temperature of 1450-1550 °C for 4 hours. A molten glass thus obtained was poured onto a carbon table and shaped into a plate.

After both surfaces were optically polished, a resultant glass plate was cut into a size of 30 × 30 × 2.8 mm to prepare the sample. The sample was measured for the light transmittance by the use of a #228 spectrophotometer manufactured by Hitachi, Ltd.

Fig. 1 shows the light transmittance curves of the samples Nos. 1, 10, and 11. Further, the light transmittances of each sample for 460 nm, 530 nm, 550 nm, 586 nm and 620 nm are shown in Tables.

As obvious from Fig. 1 and Tables, the samples Nos. 1-9 as the examples of the present invention exhibit a high transmittability for the light of the phosphor wavelengths and a large absorbability for the intermediate wavelengths corresponding to the blue-green light of 530 nm and the yellow light of 586 nm. The highest transmittance for the intermediate wavelengths is at least 3 % lower than the lowest transmittance for the phosphor wavelengths.

On the other hand, the samples Nos. 10-11 as the conventional examples exhibit substantially no absorbability for the intermediate wavelengths. Conversely, the highest transmittance for the intermediate wavelengths is higher than the lowest transmittance for the phosphor wavelengths.

Next, a 42-inch color plasma display panel was manufactured using each sample as a front glass substrate to evaluate the contrast. The contrast was evaluated visually with the sample No. 11 used as a reference. The samples which are superior, much superior, and inferior than the sample No. 11 are marked with ○ , ⓞ , and X, respectively. The results are shown in the above Tables.

As a consequence, it has been confirmed that the color plasma display panel manufactured using the substrate glass of the present invention has a high contrast.

As described so far, the substrate glass for a plasma display according to the present invention has a selective light transmitting/absorbing characteristic. It is thus possible to manufacture the plasma display having a high luminance and a high contrast.

### Industrial Applicability

As explained above, the substrate glass for a plasma display according to the present invention is suitable as a front glass substrate of a color plasma display.

## Claims

1. A substrate glass for a plasma display, characterized in that, at a thickness of 2.8 mm, a light transmittance for each of wavelengths of 530 nm and 586 nm is at least 3 % lower than a light transmittance for each of wavelengths of 460 nm, 550 nm, and 620 nm.

2. A substrate glass for a plasma display as claimed in claim 1, characterized in that Nd₂O₃ is contained in a glass composition.

3. A substrate glass for a plasma display as claimed in claim 2, characterized in that the content of Nd₂O₃ is 0.1-10 weight %.

4. A substrate glass for a plasma display as claimed in claim 3, characterized in that, at a thickness of 2.8 mm, a light transmittance for each of the wavelengths of 460 nm, 550 nm, and 620 nm is 83 % or more, a light transmittance for the wavelength of 530 nm is 80 % or less, and a light transmittance for the wavelength of 586 nm is 60 % or less.

5. A substrate glass for a plasma display as claimed in claim 3, characterized in that at least one of NiO and CoO is contained in the glass composition.

6. A substrate glass for a plasma display as claimed in claim 5, characterized in that the contents of NiO and CoO are 10-2000 ppm for NiO and 10-500 ppm for CoO.

7. A substrate glass for a plasma display as claimed in claim 6, characterized in that, at a thickness of 2.8 mm, a light transmittance for each of the wavelengths of 460 nm, 550 nm, and 620 nm is 68 % or more, a light transmittance for the wavelength of 530 nm is 66 % or less, and a light transmittance for the wavelength of 586 nm is 50 % or less.

8. A substrate glass for a plasma display as claimed in claim 1, characterized by consisting essentially of, by weight percent, SiO₂ 50-65 %, Al₂O₃ 0.5-15 %, MgO+CaO+SrO+BaO 10-27 %, Li₂O+Na₂O+K₂O 7-15 %, ZrO₂ 0-9 %, TiO₂ 0-5 %, Cl 0-1 %, and SO₃ 0-1 %.
